## Europäisches Patentamt

## European Patent Office

## Office européen des brevets

(19)

(11) Veröffentlichungsnummer: **0 114 651**
**B1**

(12) **EUROPÄISCHE PATENTSCHRIFT**

(45) Veröffentlichungstag der Patentschrift: **10.10.90**

(51) Int. Cl.⁵: **B 29 C 47/68**

(21) Anmeldenummer: **84100468.2**

(22) Anmeldetag: **18.01.84**

(54) **Siebwechselvorrichtung.**

(30) Priorität: **25.01.83 DE 3302343**

(43) Veröffentlichungstag der Anmeldung:
**01.08.84 Patentblatt 84/31**

(45) Bekanntmachung des Hinweises auf die
Patenterteilung:
**10.10.90 Patentblatt 90/41**

(84) Benannte Vertragsstaaten:
**AT CH FR GB IT LI NL**

(56) Entgegenhaltungen:
**DE-B-1 198 537**
**DE-B-2 153 962**
**US-A-1 358 595**
**US-A-2 661 497**
**US-A-3 033 256**
**US-A-3 645 401**

(73) Patentinhaber: **REHAU AG + Co**
**Rheniumhaus**
**D-8673 Rehau (DE)**

(72) Erfinder: **Gneuss, Detlef**
**Am hohen Ufer 2a**
**D-4970 Bad Oeynhausen (DE)**

Courier Press, Leamington Spa, England.

EP 0 114 651 B1

**Beschreibung**

Die Erfindung betrifft eine Siebwechselvorrichtung zur Reinigung von Kunststoffschmelzen mit einer senkrecht zur Strömungsrichtung des Kunststoffes bewegbaren Platte, die mindestens eine durchgehende, mit Sieben versehene Bohrung aufweist, wobei die bewegbare Platte eine drehbare, mit ihrem Mittelpunkt außerhalb des Fließkanals liegende Siebscheibe ist, die in einer ringförmig angeordneten Siebzone wenigstens zwei Siebkammern aufweist.

Das Reinigen von Kunststoffschmelzen mittels einer Siebvorrichtung sollte zweckmäßigerweise so erfolgen, daß während des Verarbeitungsprozesses kein oder nur ein unwesentlicher Druckanstieg erfolgen kann.

Ein Druckanstieg der Kunststoffschmelze während des Verarbeitungsprozesses kann nämlich die vielfältigsten, meist negativen Auswirkungen auf das jeweils hergestellte Endprodukt haben.

Die bekannten Siebwechselvorrichtungen können der Forderung nach einer Vermeidung des Druckanstiegs nicht entsprechen. Darüber hinaus sind bei vielen Siebwechselvorrichtungen unterbrechungen des Schmelzeflusses beim Siebwechseln notwendig.

Aus der DE—B—21 53 962 ist eine gattungsmäße Siebwechselvorrichtung bekanntgeworden, bei der eine drehbare, mit ihrem Mittelpunkt außerhalb des Fließkanals der Schneckenpresse liegende Scheibe mit mindestens zwei Siebkammern vorgesehen ist. Zur Betriebsstellung werden abwechselnd je eine der durchgehenden Bohrungen mit dem Sieb in den Strömungskanal gebracht, während jeweils das andere Sieb gereinigt oder ausgewachselt wird. Dieses Wechseln von einer Siebkammer zur anderen führt zu einer nicht unerheblichen Druckveränderung im Schmelzestrom, de zwischen den einzelnen Siebkammern verhältnismäßig große Zwischenräume vorhanden sind.

Der vorliegenden Erfindung liegt die Aufgabe zugrunde, eine Siebwechselvorrichtung zur Reinigung von Kunststoffschmelzen zu schaffen, mittels derer eine optimale Annäherung an die Zielvorstellung—Verhinderung eines Druckanstieges in der Kunststoffschmelze, insbesondere während des Siebwechsels—erreicht wird. Zur Lösung dieser Aufgabe wird vorgeschlagen, daß die Siebkammern jeweils durch gekrümmte Stege voneinander getrennt sind, deren Fläche etwa 10% oder weniger der Gesamtfläche einer Siebkammer entspricht. Eine derart kleine "Totfläche" kann beim Durchlaufen des Fließkanals insofern vernachlässigt werden, als sich gezeigt hat, daß ein Druckanstieg der Kunststoffschmelze dadurch nicht hervorgerufen wird.

Die Siebscheibe selbst kann kontinuierlich oder in jeweils kleinen Schritten gedreht werden, so daß die einzelnen Siebkammern in beständigem Wechsel in den Fließkanal eingeführt werden.

Die nicht im Fließkanal befindlichen Siebkammern sind über einen großen Winkelbereich der Siebscheibe frei zugänglich und können somit während der Zeit, in der sie sich nicht im Bereich des Fließkanales befinden, gesäubert werden. Eine Unterbrechung des Arbeitsprozesses durch Reinigungsarbeiten oder Siebwechsel ist somit ausgeschlossen.

Weitere Merkmale der Erfindung sind Gegenstand weiterer Unteransprüche.

In den beigefügten Zeichnungen sind Ausführungsbeispiele der Erfindung dargestellt und werden im folgenden näher beschrieben.

Es zeigen:

Fig. 1 eine schematische Darstellung eines Extruders mit nachgeschalteter Siebwechselvorrichtung und hinter der Siebwechselvorrichtung angeordnetem Werkzeug,

Fig. 2 eine Ansicht der Siebwechselvorrichtung in Richtung des Pfeiles II in Fig. 1,

Fig. 3 einen Schnitt nach der Linie III-III in Fig. 2,

Fig. 4 einen Schnitt nach der Linie IV-IV in Fig. 2,

Fig. 5 eine Ansicht einer Siebscheibe der Siebwechselvorrichtung nach den Fig. 2 bis 4,

Fig. 6 eine Seitenansicht der Siebscheibe gemäß Fig. 5, teilweise im Schnitt dargestellt,

Fig. 7 eine Seitenansicht einer Siebwechselvorrichtung nach einem weiteren Ausführungsbeispiel der Erfindung,

Fig. 8 eine Ansicht in Richtung des Pfeiles VIII in Fig. 7, teilweise im Schnitt dargestellt.

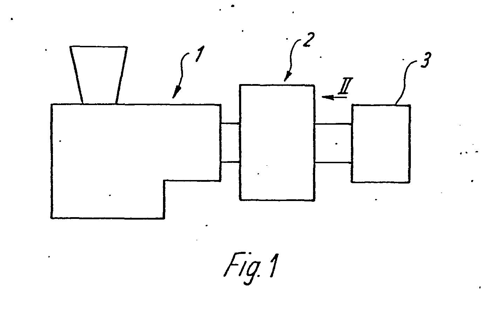

In dem in Fig. 1 dargestellten Extruder 1 wird Kunststoff in an sich bekannter Weise durch eine Schnecke plastifiziert, die erzeugte Kunststoffschmelze wird durch eine Siebwechselvorrichtung 2 hindurchgeführt, in der Siebwechselvorrichtung 2 gereinigt und anschließend einem Werkzeug 3 zugeführt.

Gegenstand der vorliegenden Erfindung ist die Siebwechselvorrichtung 2.

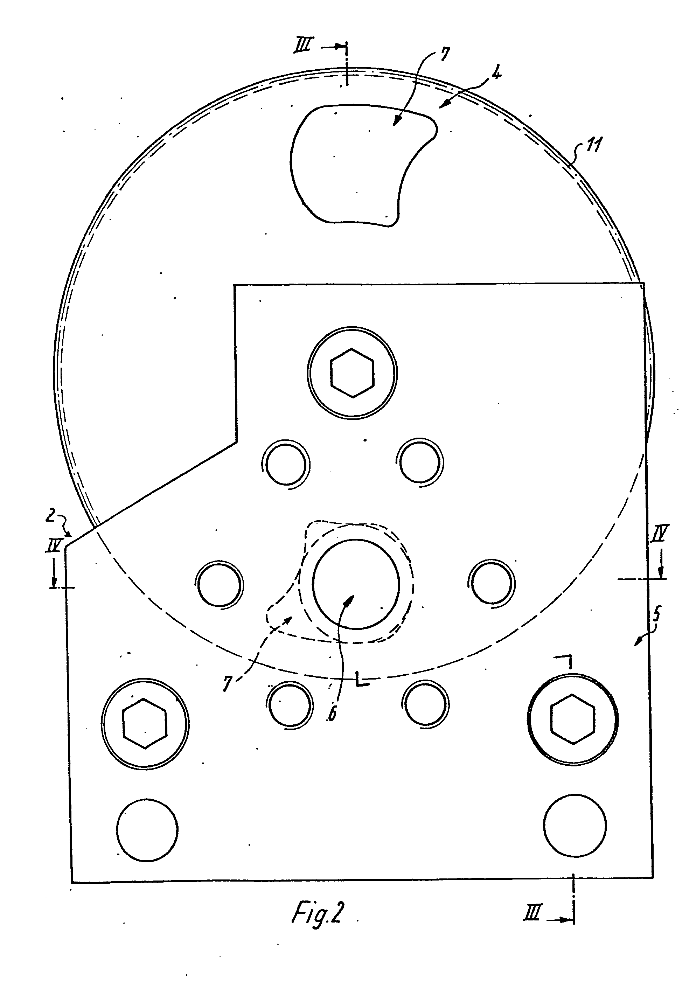

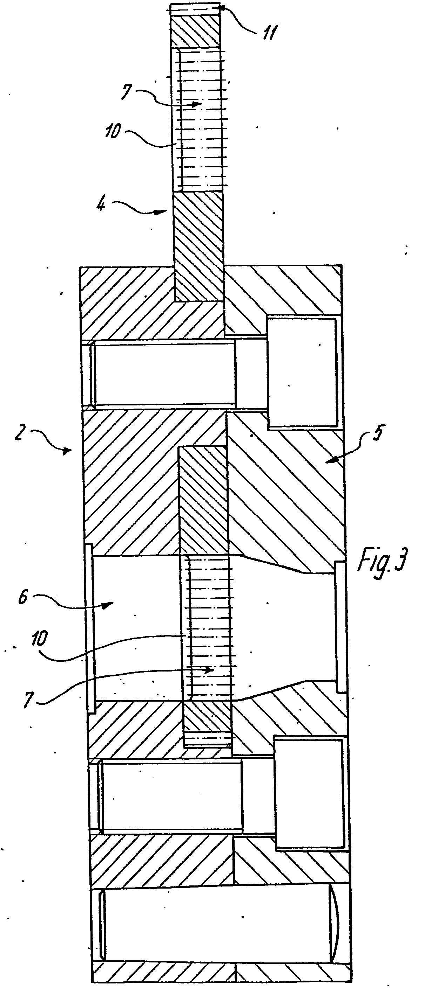

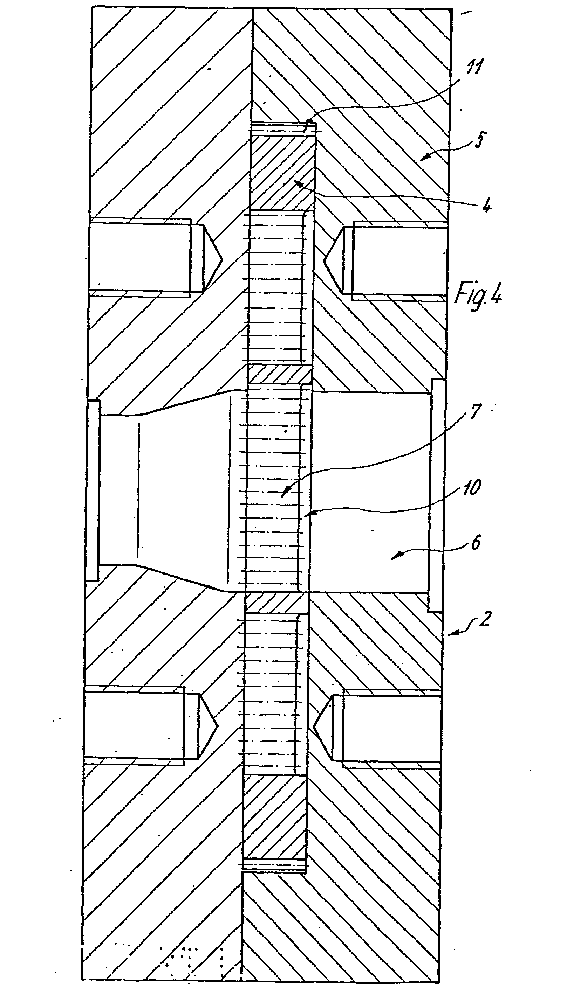

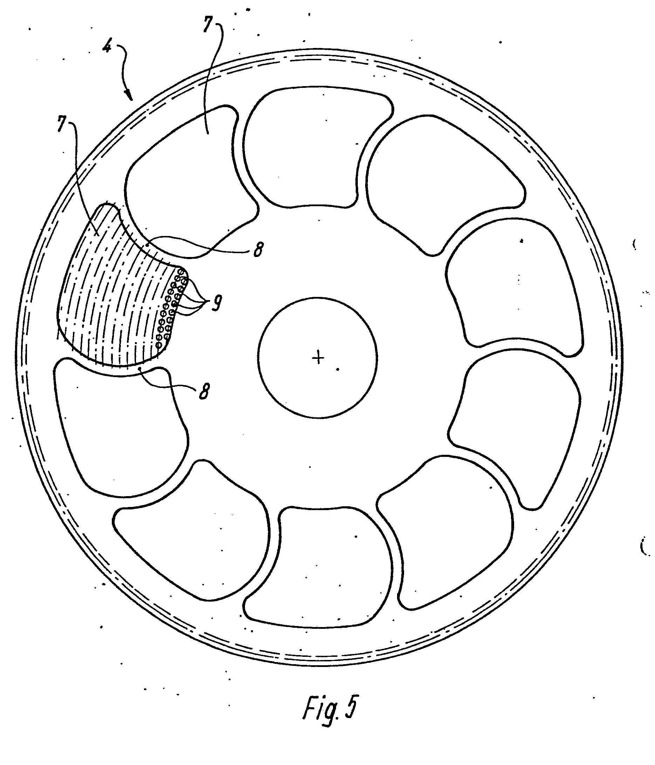

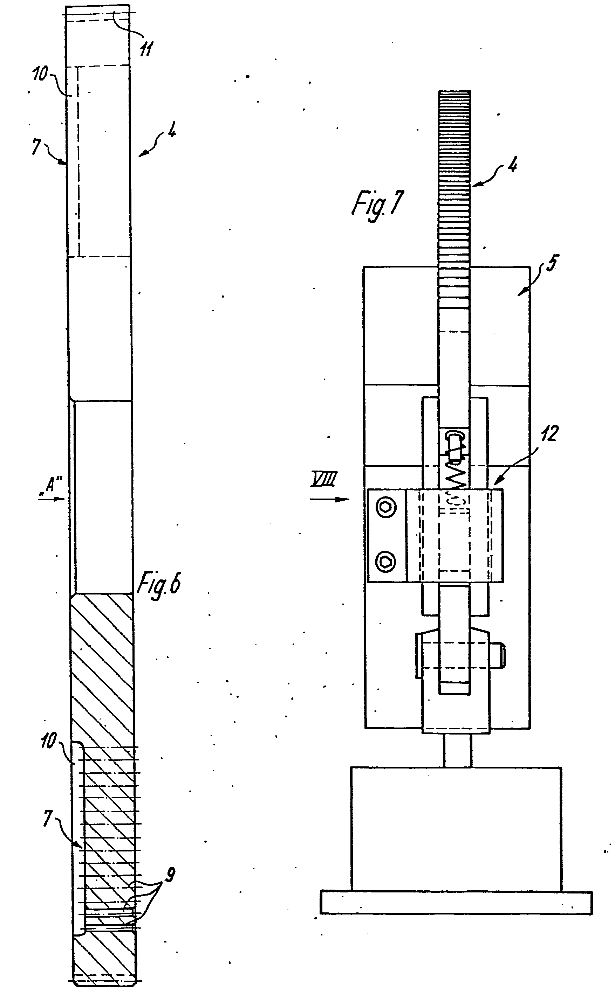

Beim Ausführungsbeispiel der Erfindung nach den Fig. 2 bis 4 wird eine Siebscheibe 4 eingesetzt, die in den Fig. 5 und 6 noch einmal als Einzelteil gezeigt ist.

Die Siebscheibe 4 ist innerhalb eines Gehäuses 5 drehbar gelagert. Das Gehäuse 5 ist mit einem Teil des Fließkanales 6 ausgestattet, durch welches Kunststoffschmelze vom Extruder 1 zum Werkzeug 3 fließen kann.

Die Siebscheibe 4 ist derart drehbar im Gehäuse 5 gelagert, daß ihr Drehpunkt außerhalb des Fließkanales 6 liegt.

Die Siebscheibe 4 ist, was insbesondere die Fig. 5 sehr deutlich zeigt, im Bereich einer äußeren, ringförmigen Zone mit einer Vielzahl von Siebkammern 7 versehen, wobei die einzelnen Siebkammern 7 jeweils durch schmale und gekrümmte Stege 8 voneinander getrennt sind.

Vorzugsweise ist die Krümmung der Stege 8 so gewählt, daß sie dem Radius des Durchflußkanales 6 angepaßt ist.

Wie die Fig. 5 und 6 sehr deutlich zeigen, ist im Bereich der Siebkammern 7 die Siebscheibe 4 mit einer Vielzahl von Durchflußbohrungen 9 versehen und—auf der in Durchflußrichtung A gesehen vorderen Seite—mit einer Vertiefung 10 ausgestattet. Die Vertiefungen 10 der Siebkammern 7 werden durch die schon erwähnten Stege 8 voneinander getrennt.

Die Einlaßtiefe der Vertiefungen 10 in die Siebscheibe 4 ist größer als die Dicke eines in die Vertiefungen 10 eingelegten Siebes oder Siebpaketes, so daß beim Reinigen der Kunststoffschmelze abgefangene Schmutzpartikelchen sich am Sieb oder Siebpaket ablagern können, ohne dabei über die in Durchflußrichtung der Schmelze gesehen vordere Seite der Siebscheibe 4 hinaus vorzustehen.

Die Siebscheibe beim Ausführungsbeispiel nach den Fig. 2 bis 6 ist an ihrem äußeren Umfang mit einer Verzahnung 11 ausgestattet und kann somit über ein in den Zeichnungen nicht dargestelltes Antriebsritzel kontinuierlich angetrieben werden.

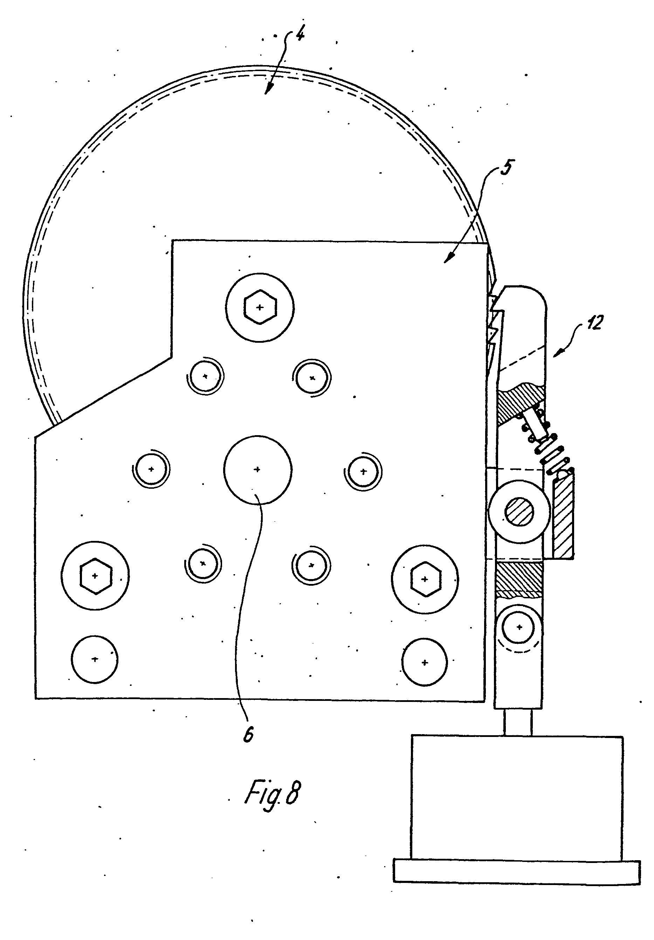

Beim Ausführungsbeispiel der Erfindung nach den Fig. 7 und 8 ist die Siebscheibe 4 an ihrem äußeren Umfang als Klinkenrad ausgebildet und kann durch einen in Fig. 8 gezeigten Sperrklinkenantrieb 12 in kleinen Schritten diskontinuierlich gedreht werden.

In Fig. 2 ist aus Vereinfachungsgründen die Siebscheibe 4 nur mit zwei vereinfacht dargestellten Siebkammern 7 gezeigt, da sich die exakte Ausbildung der Siebscheibe 4 aus den Fig. 5 und 6 ergibt. In Fig. 8 ist auf die Darstellung der einzelnen Siebkammern vollständig verzichtet worden, da die Siebscheibe 4 nach dem Ausführungsbeispiel gemäß den Fig. 7 und 8 prinzipiell genauso aufgebaut ist, wie in den Fig. 5 und 6 dargestellt.

Bezugszeichenliste

1  Extruder
2  Siebwechselvorrichtung
3  Werkzeug
4  Siebscheibe
5  Gehäuse
6  Fließkanal
7  Siebkammern
8  Stege
9  Durchflußbohrungen
10 Vertiefungen
11 Verzahnung
12 Klinkenhebelantrieb

## Patentansprüche

1. Siebwechselvorrichtung zur Reinigung von Kunststoffschmelzen mit einer senkrecht zur Strömmungsrichtung des Kunststoffes bewegbaren Platte, die mindestens eine durchgehende, mit Sieben versehene Bohrung aufweist, wobei die bewegbare Platte eine drehbare, mit ihrem Mittelpunkt außerhalb des Fließkanals liegende Siebscheibe ist, die in einer ringförmig angeordneten Siebzone wenigstens zwei Siebkammern aufweist, dadurch gekennzeichnet, daß die Siebkammern (7) jeweils durch gekrümmte Stege (8) voneinander getrennt sind, deren Fläche etwa 10% oder weniger der Gesamtfläche einer Siebkammer (7) entspricht.

2. Siebwechselvorrichtung nach Anspruch 1, dadurch gekennzeichnet, daß die Krümmung der Stege (8) dem Radius des Durchflußkanals (6) entspricht oder an den Radius des Durchflußkanals (6) angenähert ist.

3. Siebwechselvorrichtung nach einem der vorhergehenden Ansprüche, dadurch gekennzeichnet, daß auf der in Durchflußrichtung der Kunststoffschmelze gesehen vorderen Seite der Siebscheibe (4) Vertiefungen (10) vorgesehen sind, und daß die Siebscheibe (4) im Bereich der Vertiefungen (10) mit Durchflußbohrungen (9) ausgestattet ist.

4. Vorrichtung nach Anspruch 3, dadurch gekennzeichnet, daß die Einlaßtiefe der Vertiefungen (10) größer ist als die Dicke eines in die Vertiefungen (10) eingesetzten Siebes oder Siebpaketes.

5. Vorrichtung nach einem der vorhergehenden Ansprüche, dadurch gekennzeichnet, daß die Siebscheibe (4) an ihrem äußeren Umfang mit einer Verzahnung (11) versehen ist.

6. Vorrichtung nach einem der Ansprüche 1 bis 4, dadurch gekennzeichnet, daß die Siebscheibe (4) an ihrem äußeren Umfang als Klinkenrad ausgebildet und durch einen Klinkenhebelantrieb (12) antreibbar ist.

7. Vorrichtung nach einem der vorhergehenden Ansprüche, dadurch gekennzeichnet, daß der mittlere Abstand der Stege (8) zueinander um das Maß der jeweiligen Stegbreite kleiner ist als der Durchmesser des Durchflußkanales (6).

## Revendications

1. Dispositif de variation de tamisage pour l'épuration de coulées de matières plastiques comprenant une plaque mobile, verticale par rapport au sens d'écoulement de la matière plastique, pourvue d'au moins une forure équipée de tamis, la plaque mobile étant un disque perforé, dont le centre se trouve situé à l'extérieur du canal d'écoulement, disque présentant au moins deux chambres de tamisage dans une zone de tamisage disposée annulairement, dispositif caractérisé par le fait que les chambres de tamisage (7) sont séparées les unes des autres par des entretoises arquées (8) dont la surface correspond à environ 10% ou moins de la surface globale d'une chambre de tamisage.

2. Dispositif de variation de tamisage selon revendication 1, caractérisé par le fait que la courbure des entretoises (8) correspond au rayon du canal d'écoulement (6) ou se rapproche du rayon du canal d'écoulement (6).

3. Dispositif de variation de tamisage selon l'une des revendications précédentes, caractérisé par le fait que des cavités (10) sont prévues sur la face antérieure du disque de tamisage (4), vu dans le sens de l'écoulement de la matière plastique fondue et que le disque de tamisage (4) est pourvu de perforations d'écoulement (9) dans le secteur des cavités (10).

4. Dispositif selon revendication 3, caractérisé par le fait que la profondeur d'admission des cavités (10) est supérieure à l'épaisseur de l'un des tamis ou blocs de tamisage installés dans les cavités (10).

5. Dispositif selon l'une des revendications précédentes, caractérisé par le fait que le disque de tamisage (4) est pourvu d'une denture (11) sur son pourtour extérieur.

6. Dispositif selon l'une des revendications de 1 à 4, caractérisé par le fait que le disque de tamisage (4) est conçu sur son pourtour extérieur sous forme de roue à cliquet et actionnable à l'aide d'un entraînement à levier à cliquet (12).

7. Dispositif selon l'une des revendications précédentes, caractérisé par le fait que la distance moyenne entre les entretoises (8) est inféreiure au diamètre du canal d'écoulement (6) de la largeur de l'entretoise respective.

**Claims**

1. Filter changing device for cleaning plastic melts with a moveable plate positioned perpendicularly to the flow direction of the plastic, this plate having at least one through bore with screens, whereby the moveable plate is a rotating filter disc with its centre point outside the flow channel which exhibits at least two filter chambers in an annular-shaped filtering zone, characterized in that each of these filter chambers (7) are separated by curved ribs (8) whose surface area corresponds to approx. 10% or less of the total surface area of a filter chamber (7).

2. Filter changing device in accordance with claim 1, characterized in that the curve of the ribs (8) corresponds to the radius of the flow channel (6) or approximates the radius of flow channel (6).

3. Filter changing device in accordance with one of the above claims, characterized in that the front side of the filter disc (4) (as seen in the direction of melt flow) has recesses (10), and that the filter disc (4) has flow bores (9) in the vicinity of the recesses (10).

4. Device in accordance with claim 3, characterized in that the depth of the recesses on the inlet side is greater than the thickness of a screen or screen pack inserted into the recesses (10).

5. Device in accordance with one of the above claims, characterized in that filter disc (4) exhibits splines (11) on its perimeter.

6. Device in accordance with one of claims 1 to 4, characterized in that filter disc (4) is designed as a ratchet wheel and can be driven by a pawl-and-ratchet drive (12).

7. Device in accordance with one of the above claims, characterized in that the mean distance between the ribs (8) is smaller by the width of the particular rib than the diameter of the flow channel (6).

Fig. 1

Fig.2

Fig. 3

Fig.4

Fig. 5

EP 0 114 651 B1

Fig.6

Fig.7

6

*Fig. 8*